# EUROPEAN PATENT SPECIFICATION

(11) **EP 4 099 522 B1**
(45) Date of publication and mention of the grant of the patent: **29.10.2025**
(21) Application number: 20916699.0
(22) Date of filing: 27.01.2020
(51) Int. Cl.: H02B 13/035, H01H 33/18, H01H 9/44, H01H 33/56, H01H 33/22, H01H 33/666

(54) **GAS-INSULATED SWITCHGEAR**
GASISOLIERTE SCHALTANLAGE
APPAREILLAGE DE COMMUTATION ISOLÉ AU GAZ

(43) Date of publication of application: 07.12.2022
(73) Proprietor: MITSUBISHI ELECTRIC CORPORATION, Chiyoda-ku Tokyo 100-8310 (JP)
(72) Inventor: ABE, Junichi, Tokyo 100-8310 (JP); TSURIMOTO, Takao, Tokyo 100-8310 (JP); EDO, Takahiro, Tokyo 100-8310 (JP); KAI, Takayuki, Tokyo 100-8310 (JP); NAKAMURA, Yasunori, Tokyo 100-8310 (JP); MORITO, Eiji, Tokyo 102-0073 (JP)
(74) Representative: Witte, Weller & Partner Patentanwälte mbB
(86) International application number: PCT/JP2020/002670
(87) International publication number: WO 2021/152646

(56) References cited:
- WO-A1-2011/104902
- WO-A1-2012/093507
- FR-A1- 2 254 871
- JP-A- 2002 334 636
- JP-A- 2007 335 148
- JP-A- 2009 054 364
- JP-A- 2010 251 056
- US-A- 4 560 848
- US-A1- 2016 049 268

## Description

### TECHNICAL FIELD

The present disclosure relates to a gas-insulated switchgear.

### BACKGROUND ART

It is disclosed that, when two parts of a transmission line in a stopped state are grounded, a closed loop is formed, so that a magnetic flux due to currents of normal phases of the same lines and currents of other normal lines interlinks and electromagnetic induction current flows (see, for example, Non-Patent Document 1). As requirements for a switchgear provided to a power transmission and distribution grid and serving to open/close a circuit, it is necessary to interrupt the flowing electromagnetic induction current. For example, in Japan, Standard of the Japanese electrotechnical Committee JEC2310 indicates that, in a case of rating at 72 to 120 kV, when conduction current is in a range to 1200 A, recovery voltage is 1 kV and switching current is 200 A.

A switchgear in which the rated voltage is several kV or greater is placed inside a pressure tank with insulation gas sealed therein, in order to improve insulation property for a creeping surface and the like. As the insulation gas, conventionally, SF₆ gas which is excellent in insulation property has been mainly used. However, the SF₆ gas is a greenhouse gas that is very high in global warming potential, and therefore discharge thereof to the atmosphere is restricted at present. As insulation gas that is low in global warming potential and substitutes for SF₆ gas, for example, gas such as dry air, CO₂, or N₂ is desired to be used. In a case where SF₆ gas which is high in interruption performance is used as insulation gas, it is possible to interrupt electromagnetic induction current by so-called plain breaking. Here, the plain breaking is a method of interrupting current by elongating an arc occurring when electrodes are opened, using a driving device. However, in a case of using dry air whose interruption performance is about 1/100 as compared to SF₆ gas, there is a problem that it is difficult to perform interruption by plain breaking.

For the above problem, for example, it is disclosed that a magnet is provided inside a switchgear and thus an arc occurring at the time of current interruption is rotated, whereby the current is interrupted (see, for example, Patent Document 1). The rotation of the arc with use of the magnet is caused by an electromagnetic force between current flowing in the arc and a magnetic field perpendicular to the arc. In addition, in order to improve arc interruption performance, a magnetic body is provided near the magnet so as to strengthen a magnetic field generated by the magnet.

Patent Document 2, according to its abstract, states that magnetic force of a permanent magnet can be converted into arc driving force efficiently, and the permanent magnet can be insulated from arc heat so as to suppress magnetic deterioration, whereby breaking performance can be secured over a long period of time. Therefore, the switchgear includes: a fixed side contactor that is provided to a fixed side conductor; a moving contact that can be driven reciprocally with respect to the fixed side contactor, the moving contact being supported by a movable side conductor via a movable side contactor, the moving contact performing opening and closing operation by contacting to and separating from the fixed side contactor; and a permanent magnet generating a magnetic field on an arc to extinguish the arc through the opening operation, the arc being generated between the fixed side contactor and the moving contact, and the permanent magnet is provided on a tip portion of the fixed side conductor to be positioned closer to the movable side contactor side than the fixed side contactor, and the permanent magnet is covered with an insulating member.

Patent Document 3, according to its abstract, states that the fixed contact of the circuit interrupter is a ring projecting into a tube made from a derivative of polytetra-fluorethylene and mates with a mobile contact that fits in the tube. To interrupt the circuit, a plug of the same material as the tube is introduced into the tube. An arc forms between the two contacts and extends into the small space between the plug and the inside wall of the tube. Gas, released by the heating of the tube, starts to extinguish the arc. Two magnets around the fixed contact and in the mobile contact, cause the arc roots to rotate. This prevents repetitive tracking inside the tube.

Patent Document 4, according to its abstract, states that circuit breaker comprises a cylindrical fixed contact, a cylindrical movable contact and a magnetic field producing means which renders the arc current spiral when created in a space between the fixed and movable contacts in the open-contact state, wherein the magnetic field producing means produces the magnetic field having a component which traverses the intercontacts space in the direction perpendicular to the axis of the space.

Patent Document 5, according to its abstract, states that, to obtain a switch improved in arc extinguishing performance by increasing a rotation drive force in an arc extinguishing gas by locating a permanent magnet near the arc running over an arc contact and strengthening a radial magnetic field crossing the running arc, an arc contact which does not contact a movable contact and bend is arranged near arc which is generated between a fixed contact and the movable contact at the time of open circuit, and the arc generated is transferred here. A first permanent magnet is arranged at the tip part of the arc contact so that the arc may rotation drive over the arc contact.

### CITATION LIST

### PATENT DOCUMENT

Patent Document 1: Japanese Laid-Open Patent Publication No. 2010-251056
Patent Document 2: US 2016/049268 A1
Patent Document 3: FR 2 254 871 A1
Patent Document 4: US 4 560 848 A
Patent Document 5: JP 2007 335148 A

### NON-PATENT DOCUMENT

Non-Patent Document 1: "Study of High Current Interruption by Disconnector and by Earthing Switch in GIS", IEEJ Transactions B (Power and Energy), Vol. 112, No. 11, pp. 987-996, 1992

### SUMMARY OF THE INVENTION

### PROBLEMS TO BE SOLVED BY THE INVENTION

In the switchgear structure in Patent Document 1, at an upper surface of a ring-shaped permanent magnet, a ring-shaped magnetic body having a larger inner diameter and a smaller outer diameter than those of the permanent magnet is provided coaxially with the permanent magnet. Thus, a magnetic field generated from the permanent magnet is deformed by the magnetic body, whereby a magnetic field in the radial direction on a fixed electrode can be strengthened. However, when the permanent magnet and the magnetic body are provided closely to each other, due to the strengthened magnetic field, an arc occurring at the time of current interruption moves to the vicinity of an outer periphery of a movable-side electrode, thus causing a problem of damaging components, such as a current-conduction terminal, provided at the outer periphery of the movable-side electrode.

The present disclosure has been made to solve the above problem, and an object of the present disclosure is to provide a gas-insulated switchgear that prevents a current-conduction terminal provided at an outer periphery of a movable-side electrode from being damaged due to an arc.

### SOLUTION TO THE PROBLEMS

According to the present disclosure, gas-insulated switchgears as defined in the independent claims are provided. Further embodiments of the claimed invention are defined in the dependent claims. Although the claimed invention is only defined by the claims, the below embodiments, examples, and aspects are present for aiding in understanding the background and advantages of the claimed invention.

### EFFECT OF THE INVENTION

The gas-insulated switchgear according to the present disclosure can prevent a current-conduction terminal provided at an outer periphery of a movable-side electrode from being damaged due to an arc.

### BRIEF DESCRIPTION OF THE DRAWINGS

[FIG. 1] FIG. 1 is a structure view schematically showing the inside of a gas-insulated switchgear according to embodiment 1.
[FIG. 2] FIG. 2 is an enlarged sectional view of a major part of the gas-insulated switchgear according to embodiment 1.
[FIG. 3] FIG. 3 is an enlarged sectional view of a major part of the gas-insulated switchgear according to embodiment 1.
[FIG. 4] FIG. 4 is an enlarged sectional view of a major part of the gas-insulated switchgear according to embodiment 1.
[FIG. 5] FIG. 5 illustrates rotation of an arc in the gas-insulated switchgear according to embodiment 1.
[FIG. 6] FIG. 6 illustrates rotation of an arc in the gas-insulated switchgear according to embodiment 1.
[FIG. 7] FIG. 7 illustrates rotation of an arc in the gas-insulated switchgear according to embodiment 1.
[FIG. 8] FIG. 8 illustrates the influence of an arc in the gas-insulated switchgear according to embodiment 1.
[FIG. 9] FIG. 9 shows distribution of a magnetic field in a case of using a permanent magnet having a quadrangular prism shape.
[FIG. 10] FIG. 10 is an enlarged sectional view of a major part of the gas-insulated switchgear according to embodiment 1.
[FIG. 11] FIG. 11 is an enlarged sectional view of a major part of a gas-insulated switchgear according to embodiment 2.
[FIG. 12] FIG. 12 is an enlarged sectional view of a major part of a gas-insulated switchgear according to embodiment 3.
[FIG. 13] FIG. 13 is an enlarged sectional view of a major part of a gas-insulated switchgear according to embodiment 4.
[FIG. 14] FIG. 14 illustrates the influence of an arc in the gas-insulated switchgear according to embodiment 4.

### DESCRIPTION OF EMBODIMENTS

Hereinafter, a gas-insulated switchgear according to embodiments will be described with reference to the drawings. In the drawings, the same or corresponding members or parts are denoted by the same reference characters, to give description.

### Embodiment 1

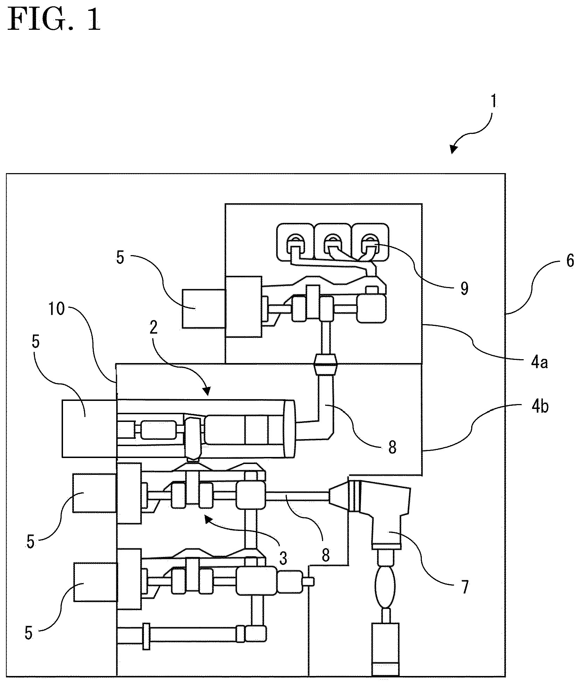

FIG. 1 is a structure view schematically showing the inside of a gas-insulated switchgear 1. In the gas-insulated switchgear 1, pressure tanks 4a, 4b which are airtight containers are provided adjacently to each other inside a cubicle 6 which is a metal housing. In the internal spaces of the pressure tanks 4a, 4b, insulation gas that is low in global warming potential, such as dry air, CO₂, or N₂, are sealed at a high pressure of approximately 0.5 MPa to 0.7 MPa in absolute pressure, for example. The gas-insulated switchgear 1 has such a structure that current led in from a cable 7 is led out via a vacuum circuit breaker 2 and a disconnector 3 to a busbar 9 connected to an upper part in the pressure tank 4a. Inside the pressure tank 4b, the vacuum circuit breaker 2 and the disconnector 3 are connected via a main circuit conductor 8. For opening/closing the vacuum circuit breaker 2 and the disconnector 3, driving devices 5 having a driving mechanism and attached at an outer part of the pressure tank 4b via a tank wall 10 are used. The disconnector 3 is a device for disconnecting a main circuit, and is connected to the vacuum circuit breaker 2 and another device via a conductor formed by a copper plate, for example. The driving mechanism has only to be attached to the airtight container and the attachment position thereof may be outside or inside of the airtight container.

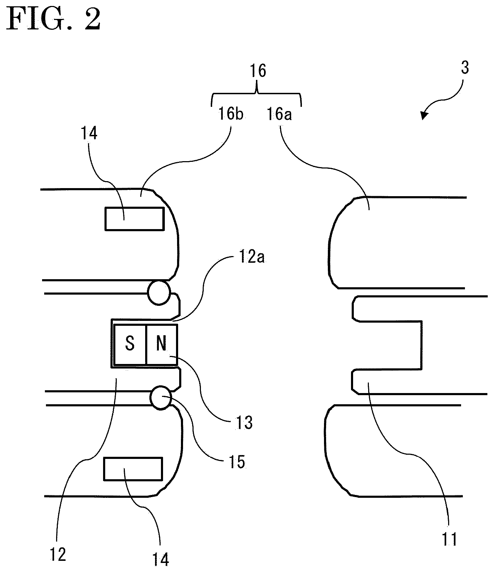

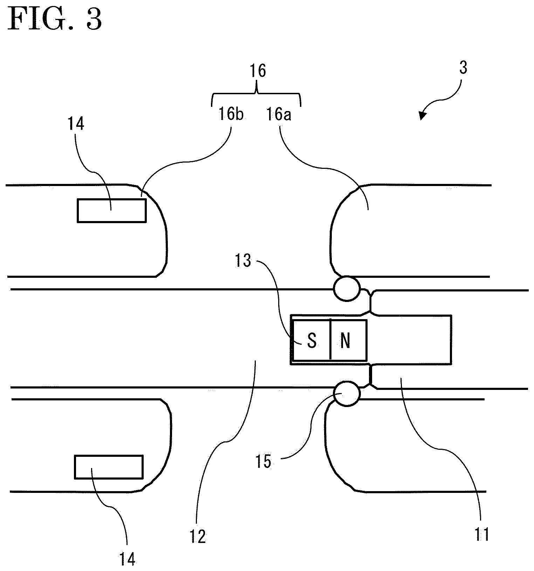

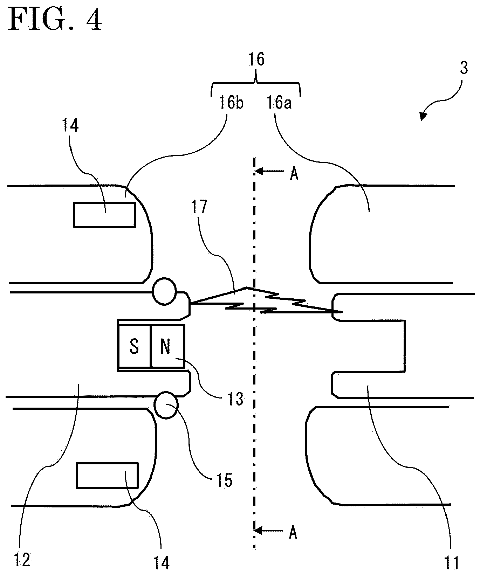

The structure of the disconnector 3, which is a major part of the present application, will be described. FIG. 2 to FIG. 4 are enlarged sectional views of a major part of the disconnector 3 in the gas-insulated switchgear 1 according to embodiment 1. FIG. 2 is a sectional view when the disconnector 3 is opened, FIG. 3 is a sectional view when the disconnector 3 is closed, and FIG. 4 is a sectional view at the time of opening during operation for current interruption. As shown in FIG. 2, the disconnector 3 is composed of a fixed-side electrode 11 and a movable-side electrode 12 provided so as to be contactable/separable with/from each other for opening a current path, and arc shields 16 surrounding these electrodes. The fixed-side electrode 11 has a columnar shape, and is provided so as to extend in the direction in which the movable-side electrode 12 is movable. In FIG. 2 to FIG. 4, the left-right direction is the direction in which the movable-side electrode 12 is movable. The movable-side electrode 12 is driven by a movable-side electrode rod (not shown) connected to the driving device 5 shown in FIG. 1. The movable-side electrode 12 is movable so as to contact/separate with/from the fixed-side electrode 11. The movable-side electrode 12 has a columnar shape, and is provided so as to extend in the movable direction. The arc shields 16 are members for relaxing an electric field on the fixed-side electrode 11 and the movable-side electrode 12 so as to protect the fixed-side electrode 11 and the movable-side electrode 12 from damage due to an arc. In addition, the arc shields 16 prevent a melted material due to an arc from adhering to the fixed-side electrode 11 and the movable-side electrode 12. A fixed-side arc shield 16a is provided for the fixed-side electrode 11, and a movable-side arc shield 16b is provided for the movable-side electrode 12.

On an inner side from the outer periphery of the movable-side electrode 12, a permanent magnet 13 which has a columnar shape and which is a first magnetic body is provided in a cavity portion 12a at a center of the movable-side electrode 12. The permanent magnet 13 is magnetized in the direction in which the movable-side electrode 12 is movable, and has, for example, an N pole on the side opposed to the fixed-side electrode 11. The permanent magnet 13 is, for example, a neodymium magnet, a samarium-cobalt magnet, or a ferrite magnet, but is not limited thereto. Here, the permanent magnet 13 is provided at such a position where an end surface of the movable-side electrode 12 and an end surface of the permanent magnet 13 are flush with each other, but the provided position of the permanent magnet 13 is not limited thereto. Instead of making the end surface of the movable-side electrode 12 and the end surface of the permanent magnet 13 flush with each other, the cavity portion 12a of the movable-side electrode 12 may be formed to be deep and the permanent magnet 13 may be provided on a further inner side of the movable-side electrode 12. This is for suppressing the influence of heat due to an arc. By suppressing the influence of heat, thermal demagnetization of the permanent magnet 13 can be suppressed.

The magnetic body 14 which has a cylindrical shape and which is a second magnetic body is placed concentrically with the permanent magnet 13, and is provided at the movable-side arc shield 16b so as to surround the movable-side electrode 12. The magnetic body 14 is a ferromagnetic body such as iron having great permeability or an alloy containing iron. The permanent magnet 13 has a columnar shape, and the magnetic body 14 provided concentrically with the permanent magnet 13 has a cylindrical shape. Therefore, the distance between the permanent magnet 13 and the magnetic body 14 is equal at all locations on the outer peripheral side surface of the permanent magnet 13. Thus, a uniform magnetic field is formed between the permanent magnet 13 and the magnetic body 14. Here, the magnetic body 14 is provided inside the movable-side arc shield 16b. However, the provided position of the magnetic body 14 is not limited thereto, and the magnetic body 14 may be provided at the outer peripheral side of the movable-side arc shield 16b.

A current-conduction terminal 15 is provided at an outer periphery of the movable-side electrode 12. The current-conduction terminal 15 is connected to a current conduction portion (not shown) serving as a current conduction path connected to another device, and is a terminal through which current flows between the movable-side electrode 12 and the current conduction portion. The current-conduction terminal 15 is formed by an electrically conductive spring component, for example. A component provided at an outer periphery of the movable-side electrode 12 is not limited to the current-conduction terminal 15 and may be another component. In addition, a position where the current-conduction terminal 15 is provided at the movable-side electrode 12 is not limited to the side where contact/separation with/from the fixed-side electrode 11 is performed.

By the driving device 5 shown in FIG. 1, the movable-side electrode 12 is driven in the left-right direction in FIG. 2 to FIG. 4. When the movable-side electrode 12 is driven rightward, as shown in FIG. 3, the movable-side electrode 12 and the fixed-side electrode 11 are closed. When the movable-side electrode 12 is driven leftward from the closed state, the movable-side electrode 12 and the fixed-side electrode 11 are opened. As shown in FIG. 4, at the time of opening, if current is being applied between the movable-side electrode 12 and the fixed-side electrode 11, an arc 17 occurs between these electrodes.

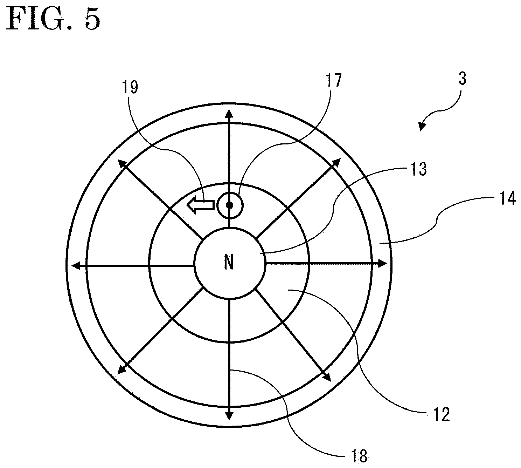

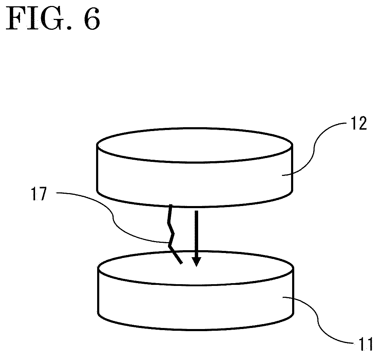

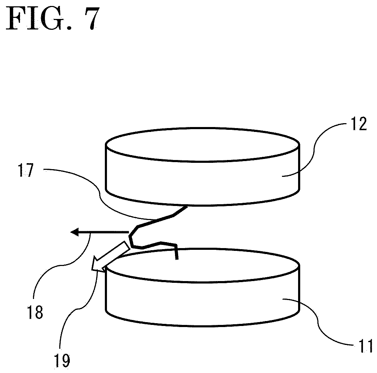

Rotation of the arc 17 will be described. FIG. 5 to FIG. 7 illustrate rotation of the arc 17 in the gas-insulated switchgear 1 according to embodiment 1. FIG. 5 is a sectional view along a dotted-dashed line in FIG. 4 as seen from the direction of an arrow A. FIG. 6 and FIG. 7 are perspective views schematically showing that the arc 17 occurring at the time of opening is led to rotate. In FIG. 5, the movable-side arc shield and the current-conduction terminal are not shown. As shown by magnetic field directions 18 in FIG. 5, the magnetic field is distributed uniformly between the permanent magnet 13 and the magnetic body 14. When the arc 17 occurs at the time of opening, if no magnetic field is applied to the arc 17, as shown in FIG. 6, current mainly has a component in a direction perpendicular to the electrodes and thus flows in the direction of an arrow. If a magnetic field from the permanent magnet 13 is applied to the arc 17, as shown in FIG. 7, a Lorentz force 19 acts on the current in a direction perpendicular to the magnetic field direction 18, so that the arc 17 starts to rotate on the movable-side electrode 12. As shown in FIG. 5, the Lorentz force 19 acts in such a direction as to rotate about the center of the permanent magnet 13. When the arc 17 rotates due to the Lorentz force 19, as shown in FIG. 7, the direction of the current is bent, and thus the current flows while changing to the horizontal direction from the direction perpendicular to the electrodes.

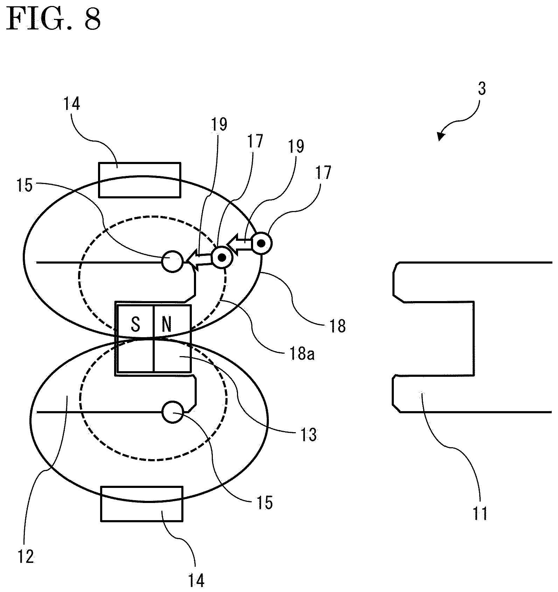

The influence of the arc 17 on the current-conduction terminal 15 will be described. FIG. 8 illustrates the influence of the arc 17 in the gas-insulated switchgear 1 according to embodiment 1. In the drawing, a magnetic field direction 18a shown by a broken line is a magnetic field direction in a case where the magnetic body 14 is not provided, and the magnetic field direction 18 shown by a solid line is a magnetic field direction in the present embodiment in which the magnetic body 14 is provided. In the case where the magnetic body 14 is not provided, a strong magnetic field is formed in the vicinity of the permanent magnet 13, namely, at a position close to the current-conduction terminal 15. According to the magnetic field direction 18a, the arc 17 rotates at a position close to the current-conduction terminal 15. When the arc 17 rotates and the current of the arc 17 mainly has a component flowing in a direction perpendicular to the drawing sheet, the Lorentz force 19 acts in a direction toward the current-conduction terminal 15. Therefore, the arc 17 might transfer to or contact with the current-conduction terminal 15. If the arc 17 contacts with the current-conduction terminal 15, there is a possibility that the current-conduction terminal 15 is melted and burned out. In addition, even if the current-conduction terminal 15 is not melted, a melted material generated due to the arc 17 might contact with the current-conduction terminal 15, leading to reduction in current conduction performance of the current-conduction terminal 15.

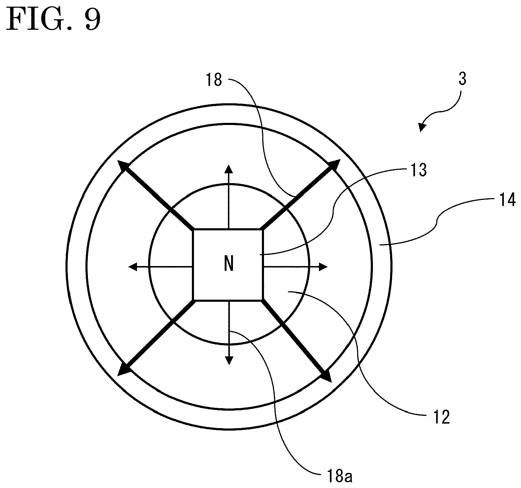

In the case where the magnetic body 14 is provided, a strong magnetic field is formed from the permanent magnet 13 in a direction toward the outer periphery of the disconnector 3 at which the magnetic body 14 is provided, instead of the vicinity of the permanent magnet 13. According to the magnetic field direction 18, the arc 17 rotates at a position close to the magnetic body 14 between the permanent magnet 13 and the magnetic body 14, namely, a position away from the current-conduction terminal 15 in the direction toward the outer periphery of the disconnector 3. Therefore, when the arc 17 rotates according to the magnetic field direction 18 and the current of the arc 17 mainly has a component flowing in the direction perpendicular to the drawing sheet, the Lorentz force 19 does not act in the direction toward the current-conduction terminal 15. Thus, the current-conduction terminal 15 is prevented from being damaged due to the arc 17. In addition, since a uniform magnetic field is formed between the permanent magnet 13 and the magnetic body 14, the Lorentz force 19 does not act in the direction toward the current-conduction terminal 15, so that the current-conduction terminal 15 is prevented from being damaged due to the arc 17. FIG. 9 is a sectional view similar to FIG. 5, showing distribution of a magnetic field in a case where the shape of the permanent magnet 13 is not a columnar shape but a quadrangular prism shape, for example. In the case where the permanent magnet 13 has a quadrangular prism shape, the distance between the permanent magnet 13 and the magnetic body 14 is not constant, and therefore a uniform magnetic field is not formed between the permanent magnet 13 and the magnetic body 14. At a location where the distance between the permanent magnet 13 and the magnetic body 14 is short, a magnetic field as shown by the magnetic field direction 18 in FIG. 8 is formed, and at a location where the distance between the permanent magnet 13 and the magnetic body 14 is long, a magnetic field as shown by the magnetic field direction 18a in FIG. 8 is formed. Even though a uniform magnetic field is not formed between the permanent magnet 13 and the magnetic body 14, there are some locations where a magnetic field as shown by the magnetic field direction 18 in FIG. 8 is formed, and therefore the current-conduction terminal 15 is prevented from being damaged due to the arc 17. In order to more effectively prevent damage to the current-conduction terminal 15, the permanent magnet 13 having a columnar shape and the magnetic body 14 having a cylindrical shape are provided concentrically with each other so that a uniform magnetic field is formed between the permanent magnet 13 and the magnetic body 14. Alternatively, the shape of the permanent magnet 13 may be a quadrangular prism shape or a polygonal prism shape. In addition, the shape of the magnetic body 14 may be a tubular shape having a polygonal outer periphery. In addition, arrangement of the permanent magnet 13 and the magnetic body 14 is not limited to concentric arrangement.

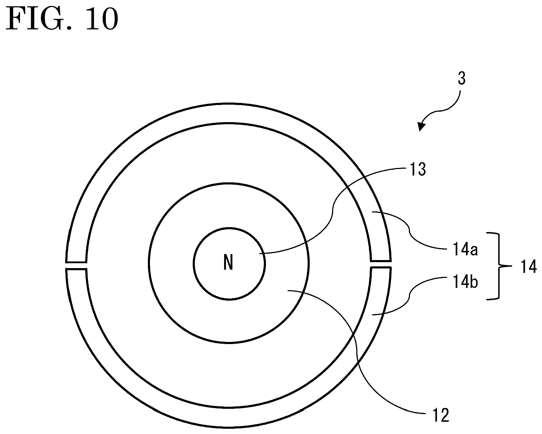

In the above description, the magnetic body 14 having a cylindrical shape with no cut part is provided. However, the shape of the magnetic body 14 is not limited thereto. FIG. 10 is a sectional view along the dotted-dashed line in FIG. 4 as shown in the direction of the arrow A. The magnetic body 14 which is the second magnetic body is cut, at least at one location, along the direction in which the movable-side electrode 12 is movable, so as to have a gap. Here, the magnetic body 14 is divided into two pieces. The magnetic body 14 is divided into a magnetic body 14a and a magnetic body 14b via gaps of approximately several mm, for example. With the gaps provided, the magnetic body 14 can be prevented from being magnetically saturated when large current is applied. Since magnetic saturation is prevented, the magnetic field is maintained between the permanent magnet 13 and the magnetic body 14.

As described above, in the gas-insulated switchgear 1, the magnetic body 14 having a tubular shape is provided so as to surround the movable-side electrode 12 provided with the permanent magnet 13. Therefore, the Lorentz force 19 does not act in the direction toward the current-conduction terminal 15 which is a component provided at the outer periphery of the movable-side electrode 12, and the current-conduction terminal 15 can be prevented from being damaged due to the arc 17. In a case where the permanent magnet 13 has a columnar shape and the magnetic body 14 provided concentrically with the permanent magnet 13 has a cylindrical shape, a uniform magnetic field is formed between the permanent magnet 13 and the magnetic body 14. Thus, the Lorentz force 19 does not act in the direction toward the current-conduction terminal 15, and the current-conduction terminal 15 can be more effectively prevented from being damaged due to the arc 17. In addition, since the Lorentz force 19 does not act in the direction toward the outer periphery of the movable-side electrode 12, the current-conduction terminal 15 can be provided at the outer periphery of the movable-side electrode 12 on the side where contact/separation with/from the fixed-side electrode 11 is performed. In a case where the magnetic body 14 is cut, at least at one part thereof, along the direction in which the movable-side electrode 12 is movable, so as to have a gap, magnetic saturation of the magnetic body 14 can be prevented.

### Embodiment 2

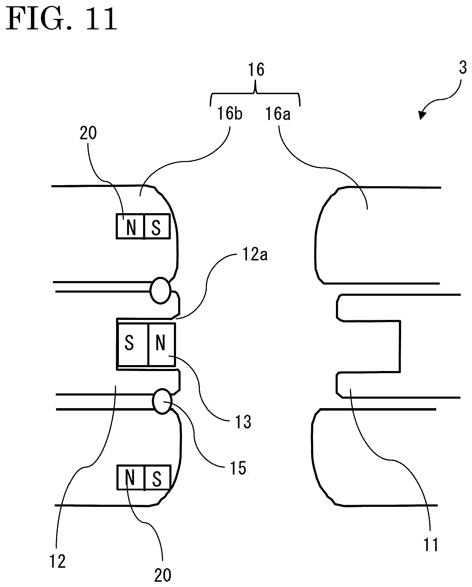

A gas-insulated switchgear 1 according to embodiment 2 will be described. FIG. 11 is an enlarged sectional view of a major part of the disconnector 3 in the gas-insulated switchgear 1. In the disconnector 3 of the gas-insulated switchgear 1 according to embodiment 2, instead of the magnetic body 14 provided in embodiment 1, a permanent magnet 20 having a magnetization direction opposite to that of the permanent magnet 13 is provided at the movable-side arc shield 16b.

On an inner side from the outer periphery of the movable-side electrode 12, the permanent magnet 13 which has a columnar shape and which is the first magnetic body is provided in the cavity portion 12a at the center of the movable-side electrode 12. The permanent magnet 13 is magnetized in the direction in which the movable-side electrode 12 is movable, and has, for example, an N pole on the side opposed to the fixed-side electrode 11. The permanent magnet 20 which has a cylindrical shape and which is the second magnetic body is placed concentrically with the permanent magnet 13, and is provided at the movable-side arc shield 16b so as to surround the movable-side electrode 12. The permanent magnet 20 is magnetized in the direction in which the movable-side electrode 12 is movable, so as to have a magnetization direction opposite to that of the permanent magnet 13, and has, for example, an S pole on the side opposed to the fixed-side electrode 11. The permanent magnet 20 is, for example, a neodymium magnet, a samarium-cobalt magnet, or a ferrite magnet, but is not limited thereto.

By using the permanent magnet 20 as the second magnetic body instead of the magnetic body 14, the value of the magnetic flux density of the magnetic field formed between the permanent magnet 13 and the permanent magnet 20 becomes higher as compared to embodiment 1. Thus, a force acting on an arc occurring at the time of interruption is also increased, and the arc is readily interrupted. As a result, the possibility that the arc and the current-conduction terminal 15 contact with each other is further lowered, and the current-conduction terminal 15 can be further prevented from being damaged due to the arc. Since the value of the magnetic flux density of the magnetic field formed between the permanent magnet 13 and the permanent magnet 20 becomes higher, the magnetic flux in the magnetic field direction 18a shown in FIG. 8 is relatively reduced. Thus, the current-conduction terminal 15 can be further prevented from being damaged due to the arc.

As described above, in the gas-insulated switchgear 1, the permanent magnet 20 having a magnetization direction opposite to that of the permanent magnet 13 is provided at the movable-side arc shield 16b. Thus, the value of the magnetic flux density of the magnetic field formed between the permanent magnet 13 and the permanent magnet 20 becomes higher, so that a force acting on an arc occurring at the time of interruption is increased, whereby the current-conduction terminal 15 can be further prevented from being damaged due to the arc.

### Embodiment 3

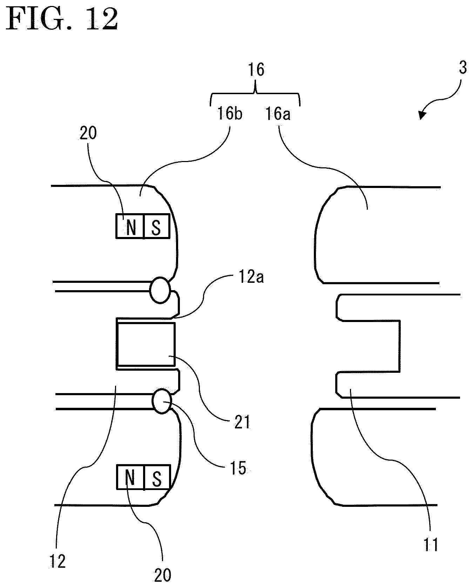

A gas-insulated switchgear 1 according to embodiment 3 will be described. FIG. 12 is an enlarged sectional view of a major part of the disconnector 3 in the gas-insulated switchgear 1. In the disconnector 3 of the gas-insulated switchgear 1 according to embodiment 3, instead of the permanent magnet 13 provided in embodiment 2, a magnetic body 21 is provided at the movable-side electrode 12.

On an inner side from the outer periphery of the movable-side electrode 12, the magnetic body 21 which has a columnar shape and which is the first magnetic body is provided in the cavity portion 12a at the center of the movable-side electrode 12. The magnetic body 21 is a ferromagnetic body such as iron having great permeability or an alloy containing iron. The permanent magnet 20 which has a cylindrical shape and which is the second magnetic body is placed concentrically with the magnetic body 21, and is provided at the movable-side arc shield 16b so as to surround the movable-side electrode 12. The permanent magnet 20 is magnetized in the direction in which the movable-side electrode 12 is movable, and has, for example, an S pole on the side opposed to the fixed-side electrode 11. The permanent magnet 20 is, for example, a neodymium magnet, a samarium-cobalt magnet, or a ferrite magnet, but is not limited thereto.

By using the permanent magnet 20 as the second magnetic body, the value of the magnetic flux density of the magnetic field formed between the magnetic body 21 and the permanent magnet 20 becomes greater as compared to embodiment 1. Thus, a force acting on an arc occurring at the time of interruption is also increased, and the arc is readily interrupted. As a result, the possibility that the arc and the current-conduction terminal 15 contact with each other is further lowered, and the current-conduction terminal 15 can be further prevented from being damaged due to the arc. The reason why the value of the magnetic flux density becomes greater as compared to embodiment 1 is that the volume of the permanent magnet 20 is greater than the volume of the permanent magnet 13. In addition, since no permanent magnet is provided at the movable-side electrode 12 through which current conducts, and the permanent magnet 20 is provided at the movable-side arc shield 16b away from the movable-side electrode 12, the permanent magnet 20 is not subjected to demagnetization due to heat generated through current conduction. Therefore, reliability of the gas-insulated switchgear 1 is improved.

As described above, in the gas-insulated switchgear 1, the magnetic body 21 is provided as the first magnetic body, and the permanent magnet 20 is provided as the second magnetic body. Thus, the value of the magnetic flux density of the magnetic field formed between the magnetic body 21 and the permanent magnet 20 becomes greater as compared to embodiment 1, so that a force acting on an arc occurring at the time of interruption is increased, whereby the current-conduction terminal 15 can be further prevented from being damaged due to the arc. In addition, since the permanent magnet 20 is provided at the movable-side arc shield 16b away from the movable-side electrode 12, the permanent magnet 20 can be prevented from being demagnetized due to heat generated through current conduction.

### Embodiment 4

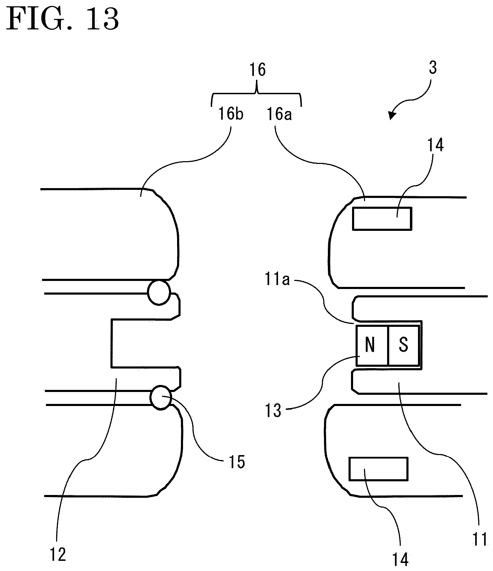

A gas-insulated switchgear 1 according to embodiment 4 will be described. FIG. 13 is an enlarged sectional view showing a major part of the disconnector 3 in the gas-insulated switchgear 1. In the disconnector 3 of the gas-insulated switchgear 1 according to embodiment 4, the permanent magnet 13 which is the first magnetic body is provided at the fixed-side electrode 11, and the magnetic body 14 which is the second magnetic body is provided at the fixed-side arc shield 16a.

On an inner side from the outer periphery of the fixed-side electrode 11, the permanent magnet 13 which has a columnar shape and which is the first magnetic body is provided in a cavity portion 11a at a center of the fixed-side electrode 11. The permanent magnet 13 is magnetized in the direction in which the movable-side electrode 12 is movable, and has, for example, an N pole on the side opposed to the movable-side electrode 12. The permanent magnet 13 is, for example, a neodymium magnet, a samarium-cobalt magnet, or a ferrite magnet, but is not limited thereto. The magnetic body 14 which has a cylindrical shape and which is the second magnetic body is placed concentrically with the permanent magnet 13, and is provided at the fixed-side arc shield 16a so as to surround the fixed-side electrode 11. The magnetic body 14 is a ferromagnetic body such as iron having great permeability or an alloy containing iron. The permanent magnet 13 has a columnar shape, and the magnetic body 14 provided concentrically with the permanent magnet 13 has a cylindrical shape. Therefore, the distance between the permanent magnet 13 and the magnetic body 14 is equal at all locations on the outer peripheral side surface of the permanent magnet 13. Therefore, a uniform magnetic field is formed between the permanent magnet 13 and the magnetic body 14.

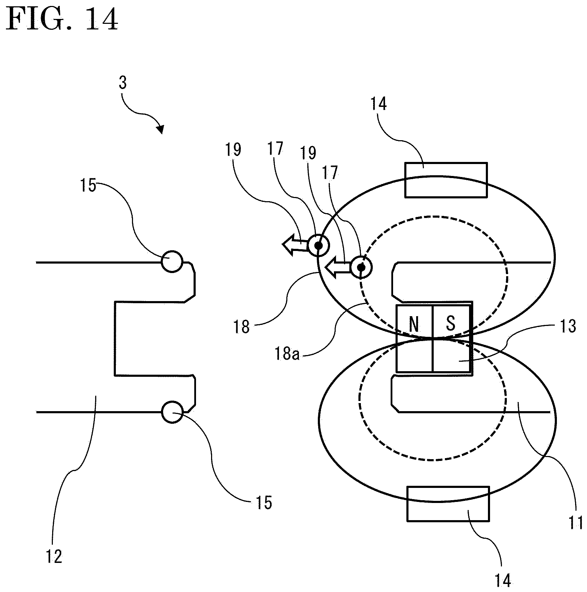

The influence of the arc 17 on the current-conduction terminal 15 will be described. FIG. 14 illustrates the influence of the arc 17 in the gas-insulated switchgear 1 according to embodiment 4. In the drawing, a magnetic field direction 18a shown by a broken line is a magnetic field direction in a case where the magnetic body 14 is not provided, and a magnetic field direction 18 shown by a solid line is a magnetic field direction in the present embodiment in which the magnetic body 14 is provided. In the case where the magnetic body 14 is not provided, a strong magnetic field is formed in the vicinity of the permanent magnet 13. According to the magnetic field direction 18a, the arc 17 rotates at a position close to the permanent magnet 13. When the arc 17 rotates and the current of the arc 17 mainly has a component flowing in a direction perpendicular to the drawing sheet, the Lorentz force 19 acts in the direction toward the current-conduction terminal 15. Therefore, the arc 17 might transfer to or contact with the current-conduction terminal 15. When the arc 17 contacts with the current-conduction terminal 15, there is a possibility that the current-conduction terminal 15 is melted and burned out. In addition, even if the current-conduction terminal 15 is not melted, a melted material generated due to the arc 17 might contact with the current-conduction terminal 15, leading to reduction in current conduction performance of the current-conduction terminal 15.

In the case where the magnetic body 14 is provided, a strong magnetic field is formed from the permanent magnet 13 in a direction toward the outer periphery of the disconnector 3 at which the magnetic body 14 is provided, instead of the vicinity of the permanent magnet 13. According to the magnetic field direction 18, the arc 17 rotates at a position close to the magnetic body 14 between the permanent magnet 13 and the magnetic body 14, namely, a position away from the current-conduction terminal 15 in the direction toward the outer periphery of the disconnector 3. Therefore, when the arc 17 rotates according to the magnetic field direction 18 and the current of the arc 17 mainly has a component flowing in the direction perpendicular to the drawing sheet, the Lorentz force 19 does not act in the direction toward the current-conduction terminal 15. Thus, the current-conduction terminal 15 is prevented from being damaged due to the arc 17. In addition, since a uniform magnetic field is formed between the permanent magnet 13 and the magnetic body 14, the Lorentz force 19 does not act in the direction toward the current-conduction terminal 15, so that the current-conduction terminal 15 is prevented from being damaged due to the arc 17. In addition, since a strong magnetic field is formed on the fixed-side electrode 11 side, rotation of the arc 17 is likely to occur at a position close to the fixed-side electrode 11. Thus, the current-conduction terminal 15 provided to the movable-side electrode 12 is further prevented from being damaged due to the arc 17.

In the above description, the permanent magnet 13 which is the first magnetic body is provided at the fixed-side electrode 11, and the magnetic body 14 which is the second magnetic body is provided at the fixed-side arc shield 16a. However, the configuration of the first magnetic body and the second magnetic body is not limited thereto. The first magnetic body may be the permanent magnet 13, and the second magnetic body may be a permanent magnet having a magnetization direction opposite to that of the permanent magnet 13. Alternatively, the first magnetic body may be a ferromagnetic body, and the second magnetic body may be a permanent magnet magnetized in the direction in which the movable-side electrode 12 is movable.

As described above, in the gas-insulated switchgear 1, the magnetic body 14 having a tubular shape is provided so as to surround the fixed-side electrode 11 provided with the permanent magnet 13. Therefore, the Lorentz force 19 does not act in the direction toward the current-conduction terminal 15 which is a component provided at the outer periphery of the movable-side electrode 12, and the current-conduction terminal 15 can be prevented from being damaged due to the arc 17. In a case where the permanent magnet 13 has a columnar shape and the magnetic body 14 provided concentrically with the permanent magnet 13 has a cylindrical shape, a uniform magnetic field is formed between the permanent magnet 13 and the magnetic body 14. Thus, the Lorentz force 19 does not act in the direction toward the current-conduction terminal 15, and the current-conduction terminal 15 can be more effectively prevented from being damaged due to the arc 17. In addition, since the permanent magnet 13 and the magnetic body 14 are provided on the fixed-side electrode 11 side, a strong magnetic field is formed on the fixed-side electrode 11 side, so that rotation of the arc 17 is likely to occur at a position close to the fixed-side electrode 11. Thus, the current-conduction terminal 15 provided to the movable-side electrode 12 can be further prevented from being damaged due to the arc 17.

### DESCRIPTION OF THE REFERENCE CHARACTERS

- 1: gas-insulated switchgear
- 2: vacuum circuit breaker
- 3: disconnector
- 4a: pressure tank
- 4b: pressure tank
- 5: driving device
- 6: cubicle
- 7: cable
- 8: main circuit conductor
- 9: busbar
- 10: tank wall
- 11: fixed-side electrode
- 11a: cavity portion
- 12: movable-side electrode
- 12a: cavity portion
- 13: permanent magnet
- 14: magnetic body
- 15: current-conduction terminal
- 16: arc shield
- 16a: fixed-side arc shield
- 16b: movable-side arc shield
- 17: arc
- 18: magnetic field direction
- 18a: magnetic field direction
- 19: Lorentz force
- 20: permanent magnet
- 21: magnetic body

## Claims

1. A gas-insulated switchgear (1) including, inside an airtight container with insulation gas sealed therein, a fixed-side electrode (11), a movable-side electrode (12) which is driven by a driving mechanism attached to the airtight container so as to contact/separate with/from the fixed-side electrode (11), and a disconnector (3) composed of the fixed-side electrode (11), the movable-side electrode (12), a fixed-side arc shield (16a) for the fixed-side electrode (11), and a movable-side arc shield (16b) for the movable-side electrode (12), the gas-insulated switchgear (1) comprising:
a first magnetic body provided on an inner side from an outer periphery of the fixed-side electrode (11);
a second magnetic body having a cylindrical shape and is provided at the fixed-side arc shield (16a) so as to surround the fixed-side electrode (11); and
a current-conduction terminal (15) provided at an outer periphery of the movable-side electrode (12), wherein
the fixed-side electrode (11) has a columnar shape, and is provided so as to extend in a direction in which the movable-side electrode (12) is movable,
the movable-side electrode (12) has a columnar shape, and is provided so as to extend in the movable direction,
at least one of the first magnetic body having a columnar shape and the second magnetic body provided concentrically with the first magnetic body is a magnet magnetized in the direction in which the movable-side electrode (12) is movable,
a distance between the first magnetic body and the second magnetic body is equal at all locations on an outer peripheral side surface of the first magnetic body, and
as compared to a case where the second magnetic body is not present, a stronger magnetic field is formed from the first magnetic body in a direction toward an outer periphery of the disconnector (3) at which the second magnetic body is provided.

2. A gas-insulated switchgear (1) including, inside an airtight container with insulation gas sealed therein, a fixed-side electrode (11), a movable-side electrode (12) which is driven by a driving mechanism attached to the airtight container so as to contact/separate with/from the fixed-side electrode (11), and a disconnector (3) composed of the fixed-side electrode (11), the movable-side electrode (12), a fixed-side arc shield (16a) for the fixed-side electrode (11), and a movable-side arc shield (16b) for the movable-side electrode (12), the gas-insulated switchgear (1) comprising:
a first magnetic body provided on an inner side from an outer periphery of the movable-side electrode (12);
a second magnetic body having a cylindrical shape and provided at the movable-side arc shield (16b) so as to surround the movable-side electrode (12); and
a current-conduction terminal (15) provided at the outer periphery of the movable-side electrode (12), wherein
the fixed-side electrode (11) has a columnar shape, and is provided so as to extend in a direction in which the movable-side electrode (12) is movable,
the movable-side electrode (12) has a columnar shape, and is provided so as to extend in the movable direction,
at least one of the first magnetic body having a columnar shape and the second magnetic body provided concentrically with the first magnetic body is a magnet magnetized in the direction in which the movable-side electrode (12) is movable,
a distance between the first magnetic body and the second magnetic body is equal at all locations on an outer peripheral side surface of the first magnetic body, and
as compared to a case where the second magnetic body is not present, a stronger magnetic field is formed from the first magnetic body in a direction toward an outer periphery of the disconnector (3) at which the second magnetic body is provided.

3. The gas-insulated switchgear (1) according to claim 1 or 2, wherein
the second magnetic body is cut at least at one part thereof so as to have a gap.

4. The gas-insulated switchgear (1) according to claim 1 or 2, wherein
the first magnetic body and the second magnetic body are magnets having magnetization directions opposite to each other.

## Patentansprüche

1. Gasisolierte Schaltanlage (1), die, in einem luftdichten Behälter mit einem darin eingeschlossenen Isoliergas, eine fixiertseitige Elektrode (11), eine bewegungsseitige Elektrode (12), die durch einen Antriebsmechanismus, der an dem luftdichten Behälter angebracht ist, so angetrieben wird, dass sie die fixiertseitige Elektrode (11) berührt/sich davon trennt, und eine Trenneinrichtung (3), die aus der fixiertseitigen Elektrode (11), der bewegungsseitigen Elektrode (12), einer fixiertseitigen Lichtbogenabschirmung (16a) für die fixiertseitige Elektrode (11) und einer bewegungsseitigen Lichtbogenabschirmung (16b) für die bewegungsseitige Elektrode (12) gebildet wird, umfasst, wobei die gasisolierte Schaltanlage (1) aufweist:
einen ersten Magnetkörper, der auf einer Innenseite, von einem äußeren Rand der fixiertseitigen Elektrode (11) aus, vorgesehen ist;
einen zweiten Magnetkörper, der eine zylindrische Form aufweist und der bei der fixiertseitigen Lichtbogenabschirmung (16a) so vorgesehen ist, dass er die fixiertseitige Elektrode (11) umgibt; und
einen Stromleitungsanschluss (15), der an einem äußeren Rand der bewegungsseitigen Elektrode (12) vorgesehen ist, wobei
die fixiertseitige Elektrode (11) eine Säulenform aufweist und so vorgesehen ist, dass sie sich in einer Richtung erstreckt, in welcher die bewegungsseitige Elektrode (12) beweglich ist,
die bewegungsseitige Elektrode (12) eine Säulenform aufweist und so vorgesehen ist, dass sie sich in der beweglichen Richtung erstreckt,
der erste magnetische Magnetkörper, der eine Säulenform aufweist, und/oder der zweite magnetische Magnetkörper, der konzentrisch zum ersten Magnetkörper vorgesehen ist, ein Magnet ist bzw. sind, der in der Richtung magnetisiert ist, in welcher die bewegungsseitige Elektrode (12) beweglich ist,
ein Abstand zwischen dem ersten Magnetkörper und dem zweiten Magnetkörper an allen Orten auf einer äußeren randseitigen Fläche des ersten Magnetkörpers gleich ist, und
im Vergleich zu einem Fall, wo der zweite magnetische Magnetkörper nicht vorhanden ist, ein stärkeres Magnetfeld von dem ersten Magnetkörper aus in einer Richtung auf einen äußeren Rand der Trenneinrichtung (3) zu ausgebildet wird, wo der zweite Magnetkörper vorgesehen ist.

2. Gasisolierte Schaltanlage (1), die, in einem luftdichten Behälter mit einem darin eingeschlossenen Isoliergas, eine fixiertseitige Elektrode (11), eine bewegungsseitige Elektrode (12), die durch einen Antriebsmechanismus, der an dem luftdichten Behälter angebracht ist, so angetrieben wird, dass sie die fixiertseitige Elektrode (11) berührt/sich davon trennt, und eine Trenneinrichtung (3), die aus der fixiertseitigen Elektrode (11), der bewegungsseitigen Elektrode (12), einer fixiertseitigen Lichtbogenabschirmung (16a) für die fixiertseitige Elektrode (11) und einer bewegungsseitigen Lichtbogenabschirmung (16b) für die bewegungsseitige Elektrode (12) gebildet wird, umfasst, wobei die gasisolierte Schaltanlage (1) aufweist:
einen ersten Magnetkörper, der an einer Innenseite, von einem äußeren Rand der bewegungsseitigen Elektrode (12) aus, vorgesehen ist;
einen zweiten Magnetkörper, der eine zylindrische Form aufweist und der bei der bewegungsseitigen Lichtbogenabschirmung (16b) so vorgesehen ist, dass er die bewegungsseitige Elektrode (12) umgibt; und
einen Stromleitungsanschluss (15), der bei dem äußeren Rand der bewegungsseitigen Elektrode (12) vorgesehen ist, wobei
die fixiertseitige Elektrode (11) eine Säulenform aufweist und so vorgesehen ist, dass sie sich in einer Richtung erstreckt, in welcher die bewegungsseitige Elektrode (12) beweglich ist,
die bewegungsseitige Elektrode (12) eine Säulenform aufweist und so vorgesehen ist, dass sie sich in der beweglichen Richtung erstreckt,
der erste Magnetkörper, der eine Säulenform aufweist, und/oder der zweite Magnetkörper, der konzentrisch zum ersten Magnetkörper vorgesehen ist, ein Magnet ist bzw. sind, der in der Richtung magnetisiert ist, in welcher die bewegungsseitige Elektrode (12) beweglich ist,
ein Abstand zwischen dem ersten Magnetkörper und dem zweiten Magnetkörper an allen Orten an einer randseitigen Fläche des ersten Magnetkörpers gleich ist, und
im Vergleich zu einem Fall, wo der zweite Magnetkörper nicht vorhanden ist, ein stärkeres Magnetfeld von dem ersten Magnetkörper aus in einer Richtung auf einen äußeren Rand der Trenneinrichtung (3) zu ausgebildet wird, bei der der zweite Magnetkörper vorgesehen ist.

3. Gasisolierte Schaltanlage (1) nach Anspruch 1 oder 2, wobei
der zweite Magnetkörper zumindest bei einem Teil davon so ausgeschnitten ist, dass er einen Spalt aufweist.

4. Gasisolierte Schaltanlage (1) nach Anspruch 1 oder 2, wobei
der erste Magnetkörper und der zweite Magnetkörper Magneten sind, die Magnetisierungsrichtungen aufweisen, die entgegengesetzt zueinander sind.

## Revendications

1. Appareillage de commutation isolé au gaz (1) comportant, à l'intérieur d'un conteneur étanche à l'air dans lequel est scellé un gaz isolant, une électrode latérale fixe (11), une électrode latérale mobile (12) qui est entraînée par un mécanisme d'entraînement fixé au conteneur étanche à l'air de manière à entrer en contact avec l'électrode latérale fixe (11) et à se séparer d'elle, et un sectionneur (3) composé de l'électrode latérale fixe (11), de l'électrode latérale mobile (12), d'une séparation d'arc latérale fixe (16a) pour l'électrode latérale fixe (11) et d'une séparation d'arc latérale mobile (16b) pour l'électrode latérale mobile (12), l'appareillage de commutation isolé au gaz (1) comprenant :
un premier corps magnétique prévu sur un côté intérieur à partir d'une périphérie extérieure de l'électrode latérale fixe (11) ;
un second corps magnétique ayant une forme cylindrique et est prévu au niveau de la séparation d'arc latérale fixe (16a) de manière à entourer l'électrode latérale fixe (11) ; et
une borne de conduction de courant (15) prévue au niveau de la périphérie intérieure de l'électrode latérale mobile (12), dans lequel
l'électrode latérale fixe (11) a une forme de colonne et est prévue de manière à s'étendre dans une direction dans laquelle l'électrode latérale mobile (12) est mobile,
l'électrode latérale mobile (12) a une forme de colonne et est prévue de manière à s'étendre dans la direction mobile,
au moins l'un parmi le premier corps magnétique ayant une forme de colonne et le second corps magnétique prévu concentriquement avec le premier corps magnétique est un aimant magnétisé dans la direction dans laquelle l'électrode du latérale mobile (12) est mobile,
une distance entre le premier corps magnétique et le second corps magnétique est égale à tous les emplacements d'une surface latérale périphérique extérieure du premier corps magnétique, et
par rapport au cas où le second corps magnétique n'est pas présent, un champ magnétique plus puissant est formé à partir du premier corps magnétique dans une direction vers une périphérie extérieure du sectionneur (3) dans lequel est prévu le second corps magnétique.

2. Appareillage de commutation isolé au gaz (1) comportant, à l'intérieur d'un conteneur étanche à l'air dans lequel est scellé un gaz isolant, une électrode latérale fixe (11), une électrode latérale mobile (12) qui est entraînée par un mécanisme d'entraînement fixé au conteneur étanche à l'air de manière à entrer en contact avec l'électrode latérale fixe (11) et à se séparer d'elle, et un sectionneur (3) composé de l'électrode latérale fixe (11), de l'électrode latérale mobile (12), d'une séparation d'arc latérale fixe (16a) pour l'électrode latérale fixe (11) et d'une séparation d'arc latérale mobile (16b) pour l'électrode latérale mobile (12), l'appareillage de commutation isolé au gaz (1) comprenant :
un premier corps magnétique prévu sur un côté intérieur à partir d'une périphérie extérieure de l'électrode latérale mobile (12) ;
un second corps magnétique ayant une forme cylindrique et prévu au niveau de la séparation d'arc latérale mobile (16b) de manière à entourer l'électrode latérale mobile (12) ; et
une borne de conduction de courant (15) prévue au niveau de la périphérie extérieure de l'électrode latérale mobile (12), dans lequel
l'électrode latérale fixe (11) a une forme de colonne et est prévue de manière à s'étendre dans une direction dans laquelle l'électrode latérale mobile (12) est mobile,
l'électrode latérale mobile (12) a une forme de colonne et est prévue de manière à s'étendre dans la direction mobile,
au moins l'un parmi le premier corps magnétique ayant une forme de colonne et le second corps magnétique prévu concentriquement avec le premier corps magnétique est un aimant magnétisé dans la direction dans laquelle l'électrode latérale mobile (12) est mobile,
une distance entre le premier corps magnétique et le second corps magnétique est égale à tous les emplacements d'une surface latérale périphérique extérieure du premier corps magnétique, et
par rapport au cas où le second corps magnétique n'est pas présent, un champ magnétique plus puissant est formé à partir du premier corps magnétique dans une direction d'une périphérie extérieure du sectionneur (3) dans lequel est prévu le second corps magnétique.

3. Appareillage de commutation isolé au gaz (1) selon la revendication 1 ou 2, dans lequel
le second corps magnétique est coupé au moins sur une partie de celui-ci de manière à présenter un espace.

4. Appareillage de commutation isolé au gaz (1) selon la revendication 1 ou 2, dans lequel :
le premier corps magnétique et le second corps magnétique sont des aimants ayant des directions d'aimantation sont opposées l'une à l'autre.
